# EUROPEAN PATENT SPECIFICATION

(11) **EP 2 903 840 B1**
(45) Date of publication and mention of the grant of the patent: **05.12.2018**
(21) Application number: 13805508.2
(22) Date of filing: 07.10.2013
(51) Int. Cl.: B60G 15/06, B60G 17/027, B60G 17/04, B60G 11/56

(54) **SUSPENSION FOR A WHEELED VEHICLE**
AUFHÄNGUNG FÜR EIN FAHRZEUG MIT RÄDERN
SUSPENSION POUR VÉHICULE À ROUES

(30) Priority: 08.10.2012 IT MI20121683
(43) Date of publication of application: 12.08.2015
(73) Proprietor: Giuliani, Federico, 06034 Foligno (PG) (IT); Bellani, Gabriele, 06034 Foligno (IT); Giuliani, Fernando, 06034 Foligno (IT)
(72) Inventor: Giuliani, Federico, 06034 Foligno (PG) (IT); Bellani, Gabriele, 06034 Foligno (IT); Giuliani, Fernando, 06034 Foligno (IT)
(74) Representative: Ercolani, Simone Pietro
(86) International application number: PCT/IB2013/002216
(87) International publication number: WO 2014/057334

(56) References cited:
- EP-A1- 0 114 680
- EP-A1- 2 301 773
- EP-A2- 0 052 782
- EP-A2- 1 258 374
- DE-A1-102004 032 083
- DE-A1-102005 008 814
- JP-A- S5 826 613
- JP-A- H03 262 720
- JP-A- H10 299 811
- JP-A- S60 136 635
- JP-A- S60 192 138
- JP-A- 2006 131 066
- JP-A- 2007 030 660
- JP-U- H0 667 942
- JP-U- S59 165 287

## Description

### FIELD OF THE INVENTION

The present invention relates to a suspension for wheeled vehicles.

Particularly, the present invention is used in the automotive and motorcycle field.

### KNOWN PREVIOUS ART

As a matter of fact, in this field suspensions for vehicles are known, which comprise a fluidic damper that is constrained between at least the wheel and the frame of the vehicle and provided with a cylinder and a piston sliding within said cylinder, and one spring element, such as a coil spring, coupleable to said fluidic damper coaxially to the latter, for the transmission of loads between the wheel and the frame when the position of said piston with respect to said cylinder changes. As also known, vehicle suspensions have to accomplish several operations, such as to absorb the ground bumps, limit the side movements of the vehicle and uniformly distribute the loads on the wheels. In this regard, the spring plays a substantial role, having just the function of transmitting the loads between the vehicle wheel and frame to ensure a greater comfort of passengers. Therefore, in the designing step of the suspensions, specifically during the spring element sizing, it is necessary to take proper precautions nevertheless considering that the spring modulus of springs is constant and thus is not able to meet all conflicting requirements of the different kind of cars. In fact, to absorb the wide travels and minimize the transmitted loads it is convenient to have a not so high spring modulus, but this involves a high roll during cornering; on the contrary if it is necessary to avoid an excessive car roll, the spring has to be sized with high spring modulus. Thus, sport cars not provided with active suspensions generally have very rigid suspensions with little travels, whereas passenger cars have softer suspensions with high roll.

Means for changing the law of transmission of loads of the spring element when the position of said piston relative to said cylinder of the damper changes, have been brought in to strike a balance between the above mentioned conflicting requirements concerning comfort and roll reduction in the suspension. In this way, it is possible to have a progression of the spring modulus such that, at the beginning, the spring modulus is low to absorb little bumps, and at greater travels, it becomes higher in order to limit the roll motion. There are several achievement ways for this; by working on the geometry of suspension arms, using a non-linear spring element, such as for example air, or using coil springs in series having different spring moduli. Unfortunately, all the previously mentioned solutions have drawbacks. Actually, the solution relating to the geometry of suspension arms is reliable, but is quite expensive and doesn't allow a dynamic adjustment of the suspension itself. On the contrary, although the use of non-linear spring elements offers a considerable versatility, since the feature of an air spring can be adjusted by changing the pressure, its current implementation is very complex. The arrangement in series of coil springs, one of which is much softer than the other and has a limited travel, allows a force-displacement characteristic curve split into two parts. A first, low coefficient part when the two springs operate in series, and a second, more rigid part starting at the end of the stroke of the softer spring, generally called "tender-spring". This system provides a passive control of the spring modulus based on the position and have a curve following the progressiveness of the air spring but as reliable as a coil spring. The price that has to be paid for this system is still the lack of versatility and adaptability, because it is necessary to replace one or more springs to change the suspension feature. Moreover, this solution makes very difficult to change the vehicle ground clearance without replacing one or more of the spring elements.

JP S59 165287 U discloses a motorbike suspension system that comprises a forward suspension and a rearward suspension.

JP 2007 0300660 A discloses a vehicle height adjusting system which can improve a riding feeling by reducing frictions and can reduce the volume and the weight of the overall system.

JP S58 26612 A relates to a car level which is automatically controlled in accordance with a car running state, by producing compressed oil in a hydraulic pump house by dint of an external vibration output.

DE102005008814 A1 relates to a hydraulic height adjustment for a motor vehicle landing gear, in particular for a spring strut with spiral spring and damping unit. It is therefore an object of the present invention to provide a suspension, alternatively to the others above mentioned systems, ensuring at the same time a high comfort and a limited car roll in all traveling conditions of the car and any type of road the car is facing.

Another object is to provide a suspension that is simple, reliable and with a greater versatility with respect to the suspensions of the known art, provided with known means for changing the law of transmission of loads of the spring element.

These and other object are achieved by the present suspension for a wheeled vehicle comprising at least one fluidic damper constrained between at least one wheel and the frame of said vehicle and provided with a cylinder and a piston sliding within said cylinder, at least one spring element coupleable to said fluidic damper for the transmission of loads between said at least one wheel and said frame when the position of said piston with respect to said cylinder changes, and means for changing the law of transmission of loads of said at least one spring element when the position of said piston relative to said cylinder changes, characterized in that said means for changing the law of transmission of loads comprise at least one gas spring operatively coupled in series to said at least one spring element and acting for at least part of the stroke of said piston relative to said cylinder, said at least one gas spring being fluidically independent from said at least one fluidic damper.

Substantially, according to the invention, the suspension comprises a spring element, or main spring, such as a coil spring, preferably having a high, but nevertheless constant or predetermined, spring modulus operatively placed in series with an air spring, preferably having a travel smaller than the spring element and anyway with a variable spring modulus based on the relative displacement of piston and cylinder of the fluidic damper, based as well on the volume and initial pressure of the gas spring itself. Basically, the means for changing the law of transmission of loads of the spring element allow to change the overall spring modulus K of the suspension, so that the inverse of the spring modulus of the coil spring, that is to say 1/k1, is added to the inverse of the spring modulus k2 of the gas spring, whose value changes based on the position of the piston relative to the cylinder of the damper. Ultimately, the overall spring modulus K of the suspension is given by the coil spring and gas spring contributions, that can be mathematically obtained adding the inverse of the constant spring modulus k1 of the coil spring to the inverse of the variable spring modulus k2 of the gas spring, that is 1/K=1/k1+1/k2. The spring modulus k2, represented by a curve that changes based on the piston displacement with respect to the cylinder of the damper, also depends on the initial volume (Vo) and initial pressure (Po), as well as on a reference surface inside the gas spring itself. On the contrary, such a spring modulus is completely independent from the geometry of the fluidic damper.

This suspension is as versatile as a suspension having only one air spring, because we can obtain an unlimited range of characteristic curves of load transmission by changing the air pressure and volume included in said gas spring, without replacing any part. Additionally, together with the above mentioned advantages, the suspension has a simple structure and a high safety degree since in case of air leakage of the gas spring, the car would be anyway supported by coil springs, therefore the suspensions would act as the traditional one.

Further, it should be noted that the gas spring is fluidically independent from said at least one fluidic damper. Basically, when the oil inside the damper moves, during the piston displacement with respect to the cylinder, the gas spring operation is not affected, the two elements being structurally separated.

This gives the advantage of uncoupling the adjustment of transmission of static loads, that is to say the loads depending on the relative position of suspension components, from the adjustment of dynamic loads depending on the speed of relative displacement of damper components. Mathematically, if we represent the force F transmitted by the suspension as F= Kx+cdx/dt, where x is the relative position of the fixed part with respect to the movable part of the suspension, or, more simply, the relative displacement of the piston with respect to the cylinder of the damper, K is the overall spring modulus given by the coil spring and gas spring contributions, that can be mathematically obtained adding the inverse of the constant spring modulus k1 of the coil spring to the inverse of the variable spring modulus k2 of the gas spring, that is 1/K=1/k1+1/k2, where c is the damping coefficient of the shock absorber, so the means for changing the law of transmission of loads allow a K adjustment based on the displacement x of the fixed part with respect o the movable part of the suspension, whereas c(dx/dt) is a function of the displacement speed dx/dt, or anyway depends only on the fluidic damper. Otherwise, in case of fluidic coupling between the gas spring and the fluidic damper, the coefficient c would in any case depend on K(x) as well. Therefore, the coefficient c would be a function of both dx/dt and K(x). This dependency condition is difficult to analyze, and, anyway, it would be difficult to control.

Moreover, K(x) is completely independent from the fluidic damper geometry, as the reference surface where the air spring pressure acts is inside the spring itself and it does not affect the damper components.

Therefore, the removal of such a dependency allows to considerably facilitate the design and adjustment of individual components, that is to say the gas spring and the fluidic damper.

Further, said at least one gas spring comprises at least one first chamber containing a gas. Said at least one first chamber is provided with at least one wall, or separator, which is sliding, or deformable, within said at least one first chamber based on the position of said piston relative to said cylinder, to change the gas volume, or pressure, inside said at least one first chamber.

In detail, said at least one gas spring comprises as well at least one second and one third chamber fluidically communicating with each other and containing an incompressible fluid, wherein said at least one third chamber is provided with at least one first portion directly or indirectly connected to said cylinder, and one second portion constrained movable sealingly with respect to said at least one first portion to transfer said incompressible fluid between said at least one second chamber and said at least one third chamber, and vice versa, when the position of said piston relative to said cylinder changes. Basically, the incompressible fluid transferred from said at least one second chamber and said at least one third chamber never contacts the fluid that is inside the damper and that is moved by the piston when it slides inside the cylinder and never transfers the pressure of said at least one second and at least one third chambers to the damper components. After all, in this case the gas spring is fluidically independent from said at least one fluidic damper.

Additionally, said at least one partition wall is also sliding, or deformable, within said at least one first chamber and within said at least one second chamber, based on the volume of incompressible fluid transferred from said at least one second chamber to said at least one third chamber, and vice versa.

Therefore, when the piston is compressed by the suspension it tends to come into the cylinder and move the oil from said third chamber to said second chamber. The force produced by the gas pressure inside said at least one first chamber will counter the movement, and will apply on the piston surface.

According to the invention, said at least one first and said at least one second chamber are formed inside a tank and said at least one wall is sliding, or deformable, inside said tank to define at least said one first chamber and said at least one second chamber.

In practice, this solution makes not necessary to provide for a gas spring sealed against gas leakages by means of two reciprocally moving parts to compress a gas. Conversely, the presence of said at least one second chamber and said at least one third chamber allows to realize a gas spring whose sealing problems are transferred to said first and second portion of said at least one third chamber housing, as mentioned, a liquid and not a gas.

In detail, said at least one first portion and said at least one second portion of said at least one third chamber are arranged coaxially to said fluidic damper, as well as said spring element. The third chamber is substantially annular-shaped and said at least one first portion comprises at least one first hollow sleeve and said at least one second portion comprises at least one second hollow sleeve shaped to sealingly slide with respect to said at least one first hollow sleeve. Moreover, said at least one first portion has a zone constrained by interference to said cylinder of said damper. According to the invention, thus, said at least one spring element has an end abutting against said at least one second portion of said at least one third chamber. Preferably, the travel of the gas spring is smaller than that of the spring element.

According to an embodiment of the invention, said gas spring comprises at least one duct for fluidically connecting said at least one second chamber with said at least one third chamber in order to transfer said incompressible fluid between said at least one second chamber and said at least one third chamber, and vice versa.

Further, the suspension also comprises first means for adjusting the gas input/output to/from said at least one first chamber. Said first adjusting means comprise at least one valve, fluidically connected with said at least one first chamber, and a system for the air inflow/ outflow to/from said at least one first chamber. This allows to adjust the gas spring features either on user request or in a dynamic way. Therefore, given a movement range for the damper, the characteristic curve of the gas spring can be easily adjusted by changing the load pressure of said first chamber. Particularly, if the load pressure of said at least one first chamber lowers, the balance position will be reached with a volume of said at least one first chamber lower than in case of a higher initial pressure, resulting in a suspension stiffening.

Furthermore, the suspension also comprises second means for adjusting the input/output of said incompressible fluid to/from said at least one second and third chamber. Said second adjusting means comprise at least one valve fluidically connected with said connecting duct, or said at least one second chamber or said at least one third chamber, and a second system for inflow/ outflow of said incompressible fluid from/to said at least one connecting duct.

By way of an oil inlet valve, any portion of the volume got inside said one first chamber maybe introduced, the chamber containing gas, such that it is possible to independently control the available stroke of the gas spring and, accordingly, the ground clearance of the vehicle.

Moreover, with the suspension according to the invention, an unlimited amount of force-displacement characteristic curves of the suspension can be obtained by adjusting the initial pressure and the volume of the oil introduced in the circuit, not only during the tuning but also dynamically without replacing any mechanical component. In this way, it is possible to have a very wide range of characteristic curves that allow to adapt a car to any operating condition, either totally comfort-oriented or sport-oriented; on road or off road. The suspension object of the present invention allows therefore to easily and reliably adjust the spring modulus based on the position of the damper. Moreover, the suspension allows to independently adjust its force-displacement characteristic curve and the vehicle ground clearance without replacing any mechanical part, easily and reliably.

When the initial pressure required to have the desired law of motion is set, the oil inlet valve can be used to adjust the initial position of the piston, and therefore the vehicle ground clearance, in a range defined by the maximum travel of the cylinder-piston system.

The maximum travel of the cylinder- piston system is a fraction of the overall travel of the suspension. The remaining part of the suspension travel is absorbed by a coil spring with a constant modulus operatively placed in series with said gas spring, ensuring the total reliability of the suspension in case of breakage of said gas spring. The suspension, which can be defined as a mix of a suspension provided with only a coil spring and a suspension provided with only a gas spring, allows to obtain a very wide range of characteristic curves, acting as a hydro pneumatic suspension in terms of progressiveness and versatility, but being as reliable as a coil spring suspension. Moreover this hybrid system can allow an active control of the suspension by way of one or more sensors, able to immediately control the suspension feature so as to dynamically obtain the change of air volume and/or pressure present inside said first chamber, or the volume of oil, or a similar liquid, present inside said at least one second and third chamber.

Moreover, the objects of the present invention are achieved, as well, by the only means for changing the law of transmission of loads for at least one spring element of a suspension comprising at least one fluidic damper provided with a cylinder and a piston sliding inside said cylinder, wherein said at least one spring element is coupleable to said fluidic damper to transmit loads between said at least one wheel and said frame when the position of said piston with respect to said cylinder changes, characterized by comprising at least one gas spring operatively coupled in series to said at least one spring element and acting for at least part of said piston stroke relative to said cylinder, wherein said at least one spring is fluidically independent from said at least one fluidic damper.

### BRIEF DESCRIPTION OF THE DRAWINGS

For purposes of illustrations and not limitative, more particular preferred embodiments of the present invention will be now provided with reference to the accompanying figures, in which:
figure 1 is a schematic longitudinal section view of a suspension according to the invention, with the piston in a first position;
figure 2 is a schematic longitudinal section view of a suspension according to the invention, with the piston in a second position;
figure 3 is a longitudinal section view of said tank;
figure 4 is a schematic view of said at least one third chamber.

### DETAILED DESCRIPTION OF SOME EMBODIMENTS OF THE PRESENT INVENTION

Referring particularly to such figures, with numeral 1 is shown a container according to the invention.

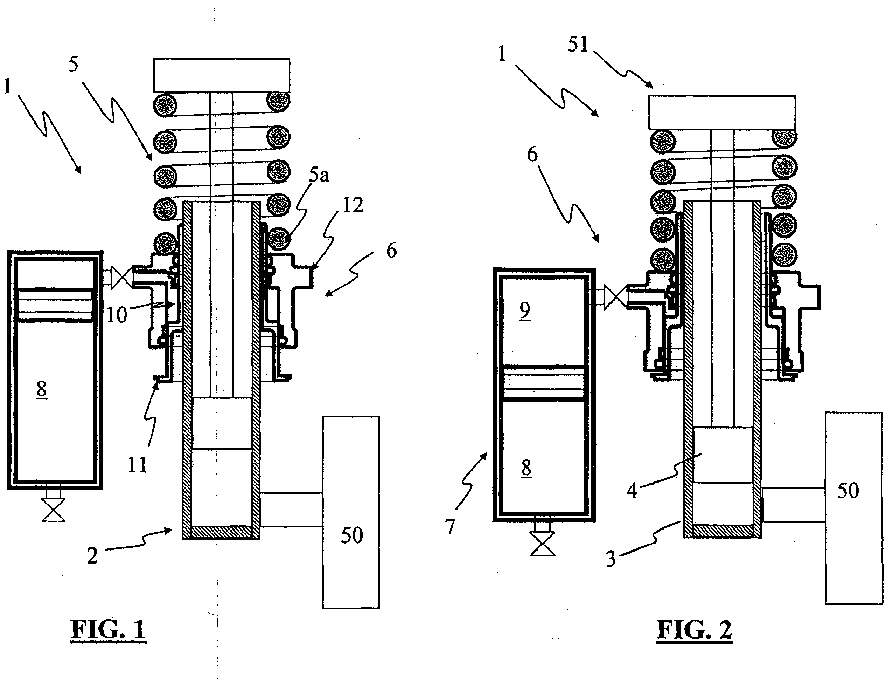

Referring to figure 1, the suspension 1 for a wheeled vehicle comprises a fluidic damper 2 constrained between a wheel 50 and the frame 51 of said vehicle (herein not shown) and provided with a cylinder 3 and a piston 4 sliding within said cylinder 3 and a spring element 5, for example a coil spring, coupleable to said fluidic damper 2 for the transmission of loads between said wheel 50 and said frame 51 when the position of said piston 4 with respect to said cylinder 3 changes. Said coil spring 5 is coaxial to said fluidic damper 2. Furthermore, said suspension 1 comprises means 6 for changing the law of transmission of loads of said spring element 5 when the position of said piston 4 relative to said cylinder 3 changes. Said means 6 for changing the law of transmission of loads comprise a gas spring 7 operatively coupled in series to said spring element 5 and acting for at least part of the stroke of said piston 4 relative to said cylinder 3. In detail, still according to the embodiment described herein, said gas spring 7 comprises a first chamber 8 containing a gas, particularly air, and is provided with a partition wall 20 which is sliding within said first chamber 8 based on the position of said piston 4 relative to said cylinder 3, to change the gas volume and/or pressure inside said first chamber 8. Preferably, said spring element 5 has a high spring modulus, in any case constant, whereas said air spring 7 operates through a stroke of the piston 4 lower than the operating stroke of the spring element 5. This allows to operate the suspension 1 through the first displacement length of the piston 4 relative to the cylinder 3, and at a higher spring modulus through the remaining displacement length of the piston 4.

It should be noted that, although the embodiments herein described relate to the suspension 1, nevertheless an embodiment relating only to the means 6 for changing the law of transmission of the loads, examined separately from said suspension 1, still falls within the protection scope of the present invention. Furthermore, it should be noted that, hereinafter, the described embodiment provides for a partition wall 20 sliding within said first chamber 8, nevertheless an embodiment wherein said partition wall 20 is deformable and comprises, for example, a diaphragm, still falls within the protection scope of the present invention.

Further, said gas spring 7 also comprises as well a second 9 and a third 10 chamber fluidically communicating with each other through a duct 13 and containing an incompressible fluid, for example oil, so that the oil could be transferred from said second chamber 9 to said third chamber 10, and vice versa, when the position of said piston 4 relative to said cylinder 3 changes. Note that an embodiment wherein the gas spring 7 comprises only said first chamber 8 still falls within the protection scope of the present invention, although not shown.

Basically, the incompressible fluid transferred between said second 9 and said third chamber 10, and vice versa, never contacts the fluid in the fluidic damper 2 displaced by the piston 4 during its sliding inside the cylinder 3, therefore said second chamber 9 and said third chamber 10 are fluidically independent from the fluidic damper 2. Therefore, ultimately, the gas spring 7 is fluidically independent from said fluidic damper 2.

More specifically, said third chamber 10 is provided with a first portion 11 directly or indirectly coupled to the cylinder and a second portion 12 constrained sliding movable sealingly with respect to said first portion 11 to transfer the oil between said second chamber 9 and said third chamber 10 and vice versa, when the position of said piston 4 relative to said cylinder 3 changes. The above mentioned partition wall 20 is sliding as well, based on the incompressible fluid volume transferred from said second chamber 9 to said third camber 10, and vice versa. As shown in figures 1 to 3, said first 8 and said second chamber 9 are formed inside a tank 100 and said wall 20 is sliding inside said tank 100 to define said first chamber 8 and said second chamber 9. Moreover, said first portion 11 and said second portion 12 of said third chamber 10 are arranged coaxially to said fluidic damper 2. In the embodiment shown herein, said third chamber 10 has a substantially annular shape in which said first portion 11 comprises a first hollow sleeve 11a having a zone 70 constrained by interference to said cylinder 3 of said fluidic damper 2 and said second portion 12 comprises a second hollow sleeve 12a shaped to sealingly slide on the outside of said first hollow sleeve 11. Thus, said spring element 5 has an end 5a abutting against said second portion 12 of said third chamber 10.

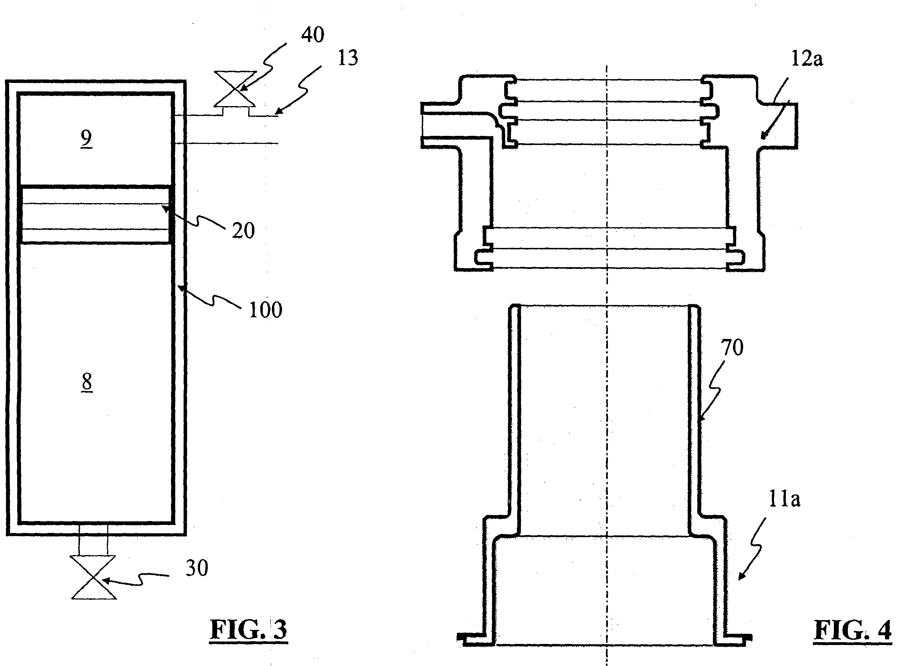

As shown in figure 3, said gas spring 7 further comprises first means for adjusting the air input/ output to/from said first chamber 8. Particularly, said first adjusting means comprise a valve 30 fluidically connected with said first chamber 8 and a system (herein not shown) for the inflow/ outflow of gas, for example preferably air, from/to said at least one first chamber. This system for the gas inflow/ outflow from/to said chamber, not shown herein, but nevertheless known to the field technician, comprises in a very simplified embodiment, a circuit housing a compressor operated by compressor adjusting elements. Thus, the circuit allows to introduce or extract air into/from said first chamber 8, venting air to the outside, according to the requests of the designer and/or the user. Actually, the control can take place either every time the car set-up changes or dynamically according to the presence of any sensors that automatically change the stiffness of the gas spring 7 based on measurements of the chamber pressure or volume.

Again, said gas spring 7 comprises second means for adjusting said incompressible fluid input/ output to/from said second 9 and third chamber 10. Even in this case, said second adjusting means comprise a valve 40 fluidically connected with said connecting duct 13 and a second system for the inflow/ outflow of said incompressible fluid from/to said at least one connecting duct. This system for the inflow/ outflow of incompressible fluid from/to said at least one connecting duct 13, not shown here, is highly well known to the field technician and comprises, in its simplified form, a closed circuit comprising at least one pump ad at least one pair of electro-valves to open and close the circuit based on the designer requirements either during the initial set-up arrangement of the vehicle, or dynamically if the set-up changes on user request. Therefore, this system allows to change the total stiffness of the gas spring 7 as well as the ground clearance of the vehicle.

Finally, even if the one or more embodiments described above relate to said suspension 1, the invention also relates to the only means 6 for changing the law of transmission of loads for one spring element 5 of a suspension 1 comprising a fluidic damper 2 provided with a cylinder 3 and a piston 4 sliding inside said cylinder 3, examined separately from said suspension 1 too. Particularly, said spring element 5, preferably a coil spring, is coupleable to said fluidic damper 2 to transmit loads between said wheel and said frame when the position of said piston 3 relative to said cylinder 4 changes. The above mentioned means 6 for changing the law of transmission of loads comprise a gas spring 7 operatively coupled in series to said spring element 5 and acting a length of the stroke of said piston 4 relative to said cylinder 3. Preferably, said spring element 5 of the coil spring type has a very high, anyway constant, spring modulus whereas said air spring 7 has a lower travel with respect to the spring element. Thus, these means 6 for changing the law of transmission of loads can be coupled in series to any suspension 1 provided with a fluidic damper 2 and one or more spring elements 5. The inclusion of said means for changing the law of transmission of said spring element in known suspensions operating with one or more coil springs of constant modulus, gives the possibility to adapt them in a later time.

## Claims

1. Suspension (1) for a wheeled vehicle comprising at least one fluidic damper (2) constrained between at least one wheel (50) and the frame (51) of said vehicle and provided with a cylinder (3) and a piston (4) sliding within said cylinder, at least one spring element (5) coupled to said fluidic damper for the transmission of loads between said at least one wheel and said frame when the position of said piston with respect to said cylinder changes, and means (6) for changing the law of transmission of loads of said at least one spring element (5) when the position of said piston relative to said cylinder changes, said means for changing the law of transmission of loads comprising at least one gas spring (7) operatively coupled in series to said at least one spring element (5) and acting for at least part of the stroke of said piston relative to said cylinder, said at least one gas spring being fluidically independent from said at least one fluidic damper, said at least one gas spring (7) comprising at least one first chamber (8) containing a gas, said at least one first chamber being provided with at least one partition wall (20) which is sliding, or deformable, within said at least one first chamber based on the position of said piston relative to said cylinder, to change the gas pressure or volume inside said at least one first chamber, said at least one gas spring (7) comprising as well at least one second (9) and one third chamber (10) fluidically communicating with each other and containing an incompressible fluid, said at least one third chamber (10) being provided with at least one first portion (11) directly or indirectly connected to said cylinder (3), and at least one second portion (12) constrained movable sealingly with respect to said at least one first portion (11) to transfer said incompressible fluid between said at least one second chamber and said at least one third chamber, and vice versa, when the position of said piston relative to said cylinder changes, said at least one partition wall (20) being slidable as well, or deformable, based on the incompressible fluid volume transferred from said at least one second chamber to said at least one third chamber, and vice versa, said at least one second chamber and said at least one third chamber being fluidically independent from said at least one fluidic damper, **characterized in that** said at least one gas spring comprises second means for adjusting said incompressible fluid input/ output to/ from said at least one second and third chamber, said second adjusting means comprising at least one valve (40) fluidically connected with said connecting duct, or said at least one second chamber or said at least one third chamber, and a second system for the inflow/ outflow of said incompressible fluid from/to said at least one connecting duct, wherein said at least one gas spring comprises first means for adjusting the gas input/ output to/ from said at least one first chamber, said first adjusting means comprising at least one valve (30), fluidically connected with said at least one first chamber, and a system for gas inflow/ outflow from/ to said at least one first chamber.

2. Suspension (1) according to claim 1, **characterized in that** said at least one first and said at least one second chamber are formed inside a tank (100) and said at least one wall (20) is slidable, or deformable, inside said tank to define at least one first chamber and said at least one second chamber.

3. Suspension (1) according to claim 2, **characterized in that** said at least one first portion and said at least one second portion of said at least one third chamber are arranged coaxially to said fluidic damper.

4. Suspension (1) according to claim 3, **characterized in that** said at least one third chamber has a substantially annular shape.

5. Suspension (1) according to claim 3 or 4, **characterized in that** said at least one first portion comprises at least one first hollow sleeve (11a) and said at least one second portion comprises at least one second hollow sleeve (12a) shaped to sealingly slide with respect to said at least one first hollow sleeve (11a).

6. Suspension (1) according to one or more of claims 2 to 5, **characterized in that** said at least one gas spring comprises at least one duct (13) for fluidically connecting said at least one second chamber (9) with said at least one third chamber (10) to transfer said incompressible fluid between said at least one second chamber and said at least one third chamber, and vice versa.

7. Suspension (1) according to one or more of the preceding claims, **characterized in that** said at least one spring element (5) is coaxial to said fluidic damper.

8. Suspension (1) according to claim 7, **characterized in that** said at least one spring element has an end (5a) abutting against said at least one second portion (12) of said at least one third chamber.

9. Means (6) for changing the law of transmission of loads for at least one spring element (5) of a suspension comprising at least one fluidic damper (2) provided with a cylinder (3) and a piston (4) which is sliding inside said cylinder, wherein said at least one spring element (5) is coupled to said fluidic damper to transmit loads between said at least one wheel and said frame when the position of said piston with respect to said cylinder changes, said means for changing the law of transmission of loads comprising at least one gas spring (7) operatively coupled in series to said at least one spring element (5) and acting for at least part of said piston stroke relative to said cylinder, said at least one gas spring being fluidically independent from said at least one fluidic damper, said at least one gas spring (7) comprising at least one first chamber (8) containing a gas, said at least one first chamber being provided with at least one partition wall (20) which is sliding, or deformable, within said at least one first chamber based on the position of said piston relative to said cylinder, to change the gas, or pressure, volume inside said at least one first chamber, said at least one gas spring (7) comprising as well at least one second (9) and one third chamber (10) fluidically communicating with each other and containing an incompressible fluid, said at least one third chamber (10) being provided with at least one first portion (11) directly or indirectly connected to said cylinder (3), and at least one second portion (12) constrained movable sealingly with respect to said at least one first portion (11) to transfer said incompressible fluid between said at least one second chamber and said at least one third chamber, and vice versa, when the position of said piston relative to said cylinder changes, said at least one partition wall (20) being slidable as well, or deformable, based on the incompressible fluid volume transferred from said at least one second chamber to said at least one third chamber, and vice versa, said at least one second chamber and said at least one third chamber being fluidically independent from said at least one fluidic damper, **characterized in that** said at least one gas spring comprises second means for adjusting said incompressible fluid input/ output to/ from said at least one second and third chamber, said second adjusting means comprising at least one valve (40) fluidically connected with said connecting duct, or said at least one second chamber or said at least one third chamber, and a second system for the inflow/ outflow of said incompressible fluid from/to said at least one connecting duct, wherein said at least one gas spring comprises first means for adjusting the gas input/ output to/ from said at least one first chamber, and wherein said first adjusting means comprise at least one valve (30), fluidically connected with said at least one first chamber, and a system for gas inflow/ outflow from/to said at least one first chamber.

## Patentansprüche

1. Radaufhängung (1) für ein Radfahrzeug, umfassend
mindestens einen, zwischen mindestens einem Rad (50) und dem Rahmen (51) des Fahrzeugs eingespannten, hydromechanischen Dämpfer (2), welcher mit einem Zylinder (3) und einem im Zylinder gleitenden Kolben (4) bereitgestellt ist, mindestens ein mit dem hydromechanischen Dämpfer gekoppeltes Federelement (5) zur Übertragung von Lasten zwischen dem mindestens einen Rad und dem Rahmen, wenn sich die Position des Kolbens relativ zum Zylinder ändert, und Mittel (6) zum Ändern der gesetzmäßigen Lastenübertragung des mindestens einen Federelements (5), wenn sich die Position des Kolbens relativ zum Zylinder ändert, wobei die Mittel zum Ändern der gesetzmäßigen Lastenübertragung mindestens eine Gasfeder (7) umfassen, welche mit dem mindestens einen Federelement (5) in Wirkverbindung seriell gekoppelt ist und mindestens für einen Teil des Hubs des Kolbens relativ zum Zylinder wirkt, wobei die mindestens eine Gasfeder fluidisch unabhängig von dem mindestens einen hydromechanischen Dämpfer ist, wobei die mindestens eine Gasfeder (7) mindestens eine erste, ein Gas enthaltende Kammer (8) umfasst, wobei die mindestens eine erste Kammer mit mindestens einer Trennwand (20) bereitgestellt ist, welche, basierend auf der Position des Kolbens relativ zum Zylinder, innerhalb der mindestens einen ersten Kammer gleitet oder verformbar ist, um den Gasdruck oder das Gasvolumen innerhalb der mindestens einen ersten Kammer zu verändern, wobei die mindestens eine Gasfeder (7) auch mindestens eine zweite (9) und eine dritte Kammer (10) umfasst, welche miteinander in fluidischer Verbindung stehen und ein nicht-komprimierbares Fluid enthalten, wobei die mindestens eine dritte Kammer (10) mit mindestens einem ersten, direkt oder indirekt mit dem Zylinder (3) verbundenen Teilbereich (11) und mindestens einem zweiten Teilbereich (12) bereitgestellt ist, welcher bezüglich des mindestens einen, ersten Teilbereichs (11) abdichtend beweglich beschränkt ist, um das nicht-komprimierbare Fluid zwischen der mindestens einen zweiten Kammer und der mindestens einen dritten Kammer, und umgekehrt, zu transferieren, wenn sich die Position des Kolbens relativ zum Zylinder ändert, wobei die mindestens eine Trennwand (20), basierend auf dem Volumen des nicht-komprimierbaren Fluids, welches zwischen der mindestens einen zweiten Kammer und der mindestens einen dritten Kammer, und umgekehrt, transferiert wird, ebenfalls gleitfähig oder verformbar ist, wobei die mindestens eine zweite Kammer und die mindestens eine dritte Kammer von dem mindestens einen hydromechanischen Dämpfer fluidisch unabhängig sind, **dadurch gekennzeichnet, dass**
die mindestens eine Gasfeder zweite Mittel zum Einstellen des Zuflusses/Abflusses des nicht-komprimierbaren Fluids zur/von der mindestens einen zweiten und dritten Kammer umfasst, wobei die zweiten Mittel zum Einstellen mindestens ein Ventil (40), welches mit dem Verbindungskanal oder der mindestens einen zweiten Kammer oder der mindestens einen dritten Kammer fluidisch verbunden ist, und ein zweites System für den Zufluss/Abfluss des nicht-komprimierbaren Fluids vom/zum mindestens einen Verbindungskanal umfassen, wobei die mindestens eine Gasfeder erste Mittel zum Einstellen des Gaszuflusses /-abflusses zur/von der mindestens einen ersten Kammer umfasst, wobei die ersten Mittel zum Einstellen mindestens ein fluidisch mit der mindestens einen ersten Kammer verbundenes Ventil (30) und ein System für den Gaszufluss /-abfluss von der/zur mindestens einen ersten Kammer umfassen.

2. Radaufhängung (1) gemäß Anspruch 1, **dadurch gekennzeichnet, dass** die mindestens eine erste und die mindestens eine zweite Kammer innerhalb eines Tanks (100) ausgebildet sind, und dass die mindestens eine Wand (20) innerhalb des Tanks verschiebbar oder verformbar ist, um mindestens eine erste Kammer und mindestens eine zweite Kammer zu definieren.

3. Radaufhängung (1) gemäß Anspruch 2, **dadurch gekennzeichnet, dass** der mindestens eine erste Teilbereich und der mindestens eine zweite Teilbereich der mindestens einen dritten Kammer koaxial zum hydromechanischen Dämpfer angeordnet sind.

4. Radaufhängung (1) gemäß Anspruch 3, **dadurch gekennzeichnet, dass** die mindestens eine dritte Kammer eine im Wesentlichen ringförmige Form aufweist.

5. Radaufhängung (1) gemäß Anspruch 3 oder 4, **dadurch gekennzeichnet, dass** der mindestens eine erste Teilbereich mindestens eine erste hohle Hülse (11a) umfasst und der mindestens eine zweite Teilbereich mindestens eine zweite hohle Hülse (12a) umfasst, welche so ausgestaltet ist, dass sie bezüglich der mindestens einen ersten hohlen Hülse (11a) abdichtend gleitet.

6. Radaufhängung (1) gemäß einem oder mehreren der Ansprüche 2 bis 5, **dadurch gekennzeichnet, dass** die mindestens eine Gasfeder mindestens einen Kanal (13) zum fluidischen Verbinden der mindestens einen zweiten Kammer (9) mit der mindestens einen dritten Kammer (10) umfasst, um das nicht-komprimierbare Fluid zwischen der mindestens einen zweiten Kammer und der mindestens einen dritten Kammer, und umgekehrt, zu transferieren.

7. Radaufhängung (1) gemäß einem oder mehreren der vorhergehenden Ansprüche, **dadurch gekennzeichnet, dass** das mindestens eine Federelement (5) koaxial zum hydromechanischen Dämpfer liegt.

8. Radaufhängung (1) gemäß Anspruch 7, **dadurch gekennzeichnet, dass** das mindestens eine Federelement ein Ende (5a) aufweist, welches gegen den mindestens einen zweiten Teilbereich (12) der mindestens einen dritten Kammer anliegt.

9. Mittel (6) zum Ändern der gesetzmäßigen Lastenübertragung für mindestens ein Federelement (5) einer Radaufhängung, umfassend mindestens einen, mit einem Zylinder (3) und einem in dem Zylinder gleitenden Kolben (4) ausgebildeten, hydromechanischen Dämpfer (2), wobei das mindestens eine Federelement (5) mit dem hydromechanischen Dämpfer gekoppelt ist, um Lasten zwischen dem mindestens einen Rad und dem Rahmen zu übertragen, wenn sich die Position des Kolbens relativ zum Zylinder ändert,
wobei die Mittel zum Ändern der gesetzmäßigen Lastenübertragung mindestens eine Gasfeder (7) umfassen, welche mit dem mindestens einen Federelement (5) in Wirkverbindung seriell gekoppelt ist und mindestens für einen Teil des Hubs des Kolbens relativ zum Zylinder wirkt, wobei die mindestens eine Gasfeder fluidisch unabhängig von dem mindestens einen hydromechanischen Dämpfer ist, wobei die mindestens eine Gasfeder (7) mindestens eine erste, ein Gas enthaltende Kammer (8) umfasst, wobei die mindestens eine erste Kammer mit mindestens einer Trennwand (20) bereitgestellt ist, welche, basierend auf der Position des Kolbens relativ zum Zylinder, innerhalb der mindestens einen ersten Kammer gleitet oder verformbar ist, um den Gasdruck oder das Gasvolumen innerhalb der mindestens einen ersten Kammer zu verändern, wobei die mindestens eine Gasfeder (7) auch mindestens eine zweite (9) und eine dritte Kammer (10) umfasst, welche miteinander in fluidischer Verbindung stehen und ein nicht-komprimierbares Fluid enthalten, wobei die mindestens eine dritte Kammer (10) mit mindestens einem ersten, direkt oder indirekt mit dem Zylinder (3) verbundenen Teilbereich (11) und mindestens einem zweiten Teilbereich (12) bereitgestellt ist, welcher bezüglich des mindestens einen, ersten Teilbereichs (11) abdichtend beweglich beschränkt ist, um das nicht-komprimierbare Fluid zwischen der mindestens einen zweiten Kammer und der mindestens einen dritten Kammer, und umgekehrt, zu transferieren, wenn sich die Position des Kolbens relativ zum Zylinder ändert, wobei die mindestens eine Trennwand (20), basierend auf dem Volumen des nicht-komprimierbaren Fluids, welches zwischen der mindestens einen zweiten Kammer und der mindestens einen dritten Kammer, und umgekehrt, transferiert wird, ebenfalls gleitfähig oder verformbar ist, wobei die mindestens eine zweite Kammer und die mindestens eine dritte Kammer von dem mindestens einen hydromechanischen Dämpfer fluidisch unabhängig sind, **dadurch gekennzeichnet, dass** die mindestens eine Gasfeder zweite Mittel zum Einstellen des Zuflusses/Abflusses des nicht-komprimierbaren Fluids zur/von der mindestens einen zweiten und dritten Kammer umfasst, wobei die zweiten Mittel zum Einstellen mindestens ein Ventil (40), welches mit dem Verbindungskanal oder der mindestens einen zweiten Kammer oder der mindestens einen dritten Kammer fluidisch verbunden ist, und ein zweites System für den Zufluss/Abfluss des nicht-komprimierbaren Fluids vom/zum mindestens einen Verbindungskanal umfassen, wobei die mindestens eine Gasfeder erste Mittel zum Einstellen des Gaszuflusses /-abflusses zur/von der mindestens einen ersten Kammer umfasst, und wobei die ersten Mittel zum Einstellen mindestens ein fluidisch mit der mindestens einen ersten Kammer verbundenes Ventil (30) und ein System für den Gaszufluss /-abfluss von der/zur mindestens einen ersten Kammer umfassen.

## Revendications

1. Suspension (1) pour un véhicule à roues comprenant au moins un amortisseur fluidique (2) encastré entre au moins une roue (50) et le châssis (51) dudit véhicule et pourvu d'un cylindre (3) et d'un piston (4) coulissant dans ledit cylindre, au moins un élément à ressort (5) étant couplé audit amortisseur fluidique pour la transmission de charges entre ladite au moins une roue et ledit châssis lorsque la position dudit piston par rapport audit cylindre varie et des moyens (6) pour changer la loi de transmission de charges dudit au moins un élément à ressort (5) lorsque la position dudit piston par rapport audit cylindre varie, lesdits moyens de changement de la loi de transmission de charges comprenant au moins un ressort à gaz (7) couplé en service en série audit au moins un élément à ressort (5) et agissant sur au moins une partie de la course dudit piston par rapport audit cylindre, ledit au moins un ressort à gaz étant indépendant au plan fluidique dudit au moins un amortisseur fluidique, ledit au moins un ressort à gaz (7) comprenant au moins une première chambre (8) contenant un gaz, ladite au moins une première chambre étant pourvue d'au moins une paroi de séparation (20) qui coulisse ou peut se déformer dans ladite au moins une première chambre sur la base de la position dudit piston par rapport audit cylindre pour faire varier la pression ou le volume de gaz à l'intérieur de ladite au moins une première chambre, ledit au moins un ressort à gaz (7) comprenant également au moins une deuxième (9) et une troisième chambre (10) communiquant l'une avec l'autre au plan fluidique et contenant un fluide incompressible, ladite au moins une troisième chambre (10) étant pourvue d'au moins une première partie (11) raccordée directement ou indirectement audit cylindre (3), et d'au moins une seconde partie (12) encastrée mobile de manière étanche par rapport à ladite au moins une première partie (11) pour transférer ledit fluide incompressible entre ladite au moins une deuxième chambre et ladite au moins une troisième chambre et vice-versa lorsque la position dudit piston par rapport audit cylindre varie, ladite au moins une paroi de séparation (20) pouvant coulisser également ou se déformer, sur la base du volume de fluide incompressible transféré de ladite au moins une deuxième chambre à ladite au moins une troisième chambre et vice-versa, ladite au moins une deuxième chambre et ladite au moins une troisième chambre étant indépendantes au plan fluidique dudit au moins un amortisseur fluidique, **caractérisée en ce que** ledit au moins un ressort à gaz comprend des seconds moyens pour ajuster ladite entrée/sortie de fluide incompressible desdites au moins une deuxième et une troisième chambre, lesdits seconds moyens d'ajustement comprenant au moins une vanne (40) raccordée en mode fluidique audit conduit de raccordement ou à ladite au moins une deuxième chambre ou à ladite au moins une troisième chambre, et un second système pour l'entrée/sortie dudit fluide incompressible dans ledit au moins un conduit de raccordement, dans laquelle ledit au moins un ressort à gaz comprend des premiers moyens pour ajuster l'entrée/sortie de gaz dans ladite au moins une première chambre, lesdits premiers moyens d'ajustement comprenant au moins une vanne (30) raccordée en mode fluidique à ladite au moins une première chambre, et un système d'entrée/sortie de gaz dans ladite au moins une première chambre.

2. Suspension (1) selon la revendication 1, **caractérisée en ce que** ladite au moins une première et ladite au moins une deuxième chambre sont formées à l'intérieur d'un réservoir (100) et ladite au moins une paroi (20) peut coulisser ou se déformer à l'intérieur dudit réservoir pour définir au moins une première chambre et ladite au moins une deuxième chambre.

3. Suspension (1) selon la revendication 2, **caractérisée en ce que** ladite au moins une première partie et ladite au moins une seconde partie de ladite au moins une troisième chambre sont agencées coaxialement audit amortisseur fluidique.

4. Suspension (1) selon la revendication 3, **caractérisée en ce que** ladite au moins une troisième chambre a une forme sensiblement annulaire.

5. Suspension (1) selon la revendication 3 ou 4, **caractérisée en ce que** ladite au moins une première partie comprend au moins une première douille creuse (11a) et ladite au moins une seconde partie comprend au moins une seconde douille creuse (12a) conformée pour coulisser de manière étanche par rapport à ladite au moins une première douille creuse (11a).

6. Suspension (1) selon une ou plusieurs des revendications 2 à 5, **caractérisée en ce que** ledit au moins un ressort à gaz comprend au moins un conduit (13) pour raccorder au plan fluidique ladite au moins une deuxième chambre (9) à ladite au moins une troisième chambre (10) pour transférer ledit fluide incompressible entre ladite au moins une deuxième chambre et ladite au moins une troisième chambre et vice-versa.

7. Suspension (1) selon une ou plusieurs des revendications précédentes, **caractérisée en ce que** ledit au moins un élément à ressort (5) est coaxial avec ledit amortisseur fluidique.

8. Suspension (1) selon la revendication 7, **caractérisée en ce que** ledit au moins un élément à ressort a une extrémité (5a) s'aboutant contre ladite au moins une seconde partie (12) de ladite au moins une troisième chambre.

9. Moyens (6) pour changer la loi de transmission de charges dudit au moins un élément à ressort (5) d'une suspension comprenant au moins un amortisseur fluidique (2) pourvu d'un cylindre (3) et d'un piston (4) qui coulisse à l'intérieur dudit cylindre, dans lequel ledit au moins un élément à ressort (5) est couplé audit amortisseur fluidique pour transmettre des charges entre ladite au moins une roue et ledit châssis lorsque la position dudit piston par rapport audit cylindre varie, lesdits moyens de changement de la loi de transmission de charges comprenant au moins un ressort à gaz (7) couplé en service en série audit au moins un élément à ressort (5) et agissant sur au moins une partie de la course dudit piston par rapport audit cylindre, ledit au moins un ressort à gaz étant indépendant au plan fluidique dudit au moins un amortisseur fluidique, ledit au moins un ressort à gaz (7) comprenant au moins une première chambre (8) contenant un gaz, ladite au moins une première chambre étant pourvue d'au moins une paroi de séparation (20) qui coulisse ou peut se déformer dans ladite au moins une première chambre sur la base de la position dudit piston par rapport audit cylindre pour faire varier la pression ou le volume de gaz à l'intérieur de ladite au moins une première chambre, ledit au moins un ressort à gaz (7) comprenant également au moins une deuxième (9) et une troisième chambre (10) communiquant l'une avec l'autre au plan fluidique et contenant un fluide incompressible, ladite au moins une troisième chambre (10) étant pourvue d'au moins une première partie (11) raccordée directement ou indirectement audit cylindre (3), et d'au moins une seconde partie (12) encastrée mobile de manière étanche par rapport à ladite au moins une première partie (11) pour transférer ledit fluide incompressible entre ladite au moins une deuxième chambre et ladite au moins une troisième chambre et vice-versa lorsque la position dudit piston par rapport audit cylindre varie, ladite au moins une paroi de séparation (20) pouvant coulisser également ou se déformer, sur la base du volume de fluide incompressible transféré de ladite au moins une deuxième chambre à ladite au moins une troisième chambre et vice-versa, ladite au moins une deuxième chambre et ladite au moins une troisième chambre étant indépendantes au plan fluidique dudit au moins un amortisseur fluidique, **caractérisés en ce que** ledit au moins un ressort à gaz comprend des seconds moyens pour ajuster ladite entrée/sortie de fluide incompressible desdites au moins une deuxième et une troisième chambre, lesdits seconds moyens d'ajustement comprenant au moins une vanne (40) raccordée en mode fluidique audit conduit de raccordement ou à ladite au moins une deuxième chambre ou à ladite au moins une troisième chambre, et un second système pour l'entrée/sortie dudit fluide incompressible dans ledit au moins un conduit de raccordement, dans laquelle ledit au moins un ressort à gaz comprend des premiers moyens pour ajuster l'entrée/sortie de gaz dans ladite au moins une première chambre, lesdits premiers moyens d'ajustement comprenant au moins une vanne (30) raccordée en mode fluidique à ladite au moins une première chambre, et un système d'entrée/sortie de gaz dans ladite au moins une première chambre.
